# EUROPEAN PATENT APPLICATION

(11) **EP 1 488 956 A2**
(43) Date of publication of application: **22.12.2004**
(21) Application number: 04013975.0
(22) Date of filing: 15.06.2004
(51) Int. Cl.: B60Q 1/52, B60Q 1/48, B60Q 5/00

(54) **Vehicular traveling information alarm system**

(30) Priority: 18.06.2003 JP 2003173855
(71) Applicant: Denso Corporation, Kariya-city, Aichi-pref., 448-8661 (JP)
(72) Inventor: Sawada, Mamoru Denso Corporation, Kariya-city Aichi-pref., 448-8661 (JP); Matsumoto, Toshiki Denso Corporation, Kariya-city Aichi-pref., 448-8661 (JP)
(74) Representative: Winter, Brandl, Fürniss, Hübner, Röss, Kaiser, Polte Partnerschaft

(57) **Abstract**

A danger determining section (1a to 3a) detects a danger potentially approaching a vehicle and an orientation of the danger, generating an output indicating that the danger potentially approaches the vehicle and the orientation of the danger. A plurality of speakers (5a to 5d) each generates an alarming sound based on the output from the danger determining section. When a danger is detected by the danger determining section, one of the speakers (5a to 5d) that is disposed in a position corresponding to the orientation of the danger sounds an alarming sound. This enables notification to a driver or the like of which orientation the danger approaches the vehicle from or which orientation the danger exists in.

## Description

The present invention relates to a vehicular traveling information alarm system that notifies a driver of information relating to vehicle's traveling such as information of an obstacle inside or outside a road while the vehicle is traveling or information of road configuration.

Conventionally, an alarming system is proposed (e.g., refer to JP-A-2000-272414) that outputs an alarm by generating different blinker sounds according to a vehicle speed, or by generating a blinker sound when a danger due to changing traveling lane is determined according to a distance to the following vehicle.

In the above conventional technology, varying of a blinker sound notifies a driver of a danger degree during driving a vehicle; however, nothing is proposed that notifies a driver of which orientation a danger approaches from or which orientation a danger exists in, with respect to the vehicle.

The present invention has been made in consideration of the foregoing. It is therefore an object of this invention to provide a vehicular traveling information alarm system being capable of notifying a driver of which orientation a danger approaches from or which orientation a danger exists in, with respect to the vehicle.

To achieve the above object, a vehicular traveling information alarm system is characterized by comprising:
a danger determining section for detecting a danger that potentially approaches a vehicle and an orientation of the danger and generating an output indicating that the danger potentially approaches the vehicle and the orientation; and
a plurality of alarming sections, each of which generates an alarming sound based on the output from the danger determining section,
wherein each alarming section constituting the plurality of alarming sections is disposed in a different position within an interior of the vehicle, and
wherein, when a danger is detected by the danger determining section,
one of the alarming sections that is disposed in a position corresponding to an orientation of the danger generates an alarming sound.

In this manner, by sounding an alarming section disposed in a position corresponding to the orientation of the danger, a driver can be notified of which orientation the danger approaches from or which orientation the danger exists in, with respect to the vehicle.

In another aspect of the present invention, the vehicular traveling information alarm system is characterized by further comprises:
danger type and degree determining means (4) for determining a type and/or degree of the danger according to the output of the danger determining section and outputting a result of determining to the alarming sections,
wherein the alarming sound is generated according to the type of the danger and/or the degree of the danger determined by the danger type and degree determining means.

In this manner, an alarming sound can be outputted according to the types or degrees of the danger.

In another aspect of the present invention, for instance, the vehicular traveling information alarm system can be constructed such that,
the alarming sound is generated when the type of the danger determined by the danger type and degree determining means is a given type or when the degree of the danger exceeds a threshold (K1).

In another aspect of the present invention, the vehicular traveling information alarm system can be constructed such that the alarming sound is varied according to the degree and/or type of the danger determined by the danger type and degree determining means. Further, it can be constructed such that a volume and/or a quality of the alarming sound is varied according to the degree and/or type of the danger determined by the danger type and degree determining means.

In another aspect of the present invention, the system is characterized in that the danger determining section detects a plurality of dangers potentially approaching the vehicle,
the vehicular traveling information alarm system further comprising:
mediating means for mediating the plurality of dangers detected by the danger determining section and outputting a signal according to a result of mediating to the alarming sections, wherein the alarming sections generate the alarming sounds according to the result of mediating.

In this manner, the danger determining section detects a plurality of dangers, and mediating means mediates the plurality of dangers to output the alarming sound according to a result of mediating to the alarming sections. For instance, the mediating means determines a type and/or degree of the danger and outputs, to the alarming sections, a signal according to a result of mediating.

In another aspect of the present invention, the vehicular traveling information alarm system is characterized in that the danger determining section detects the plurality of dangers by at least two danger determining devices having different functions,
the mediating means outputting, to the alarming sections, different signals depending on which of the danger determining devices having the different functions detects each of the plurality of dangers, and
the alarming sections generate different alarming sounds according to the different signals.

In this manner, when the plurality of dangers are detected by at least two danger determining devices having different functions, the alarming sections can be constructed to output different alarming sounds depending on which of the danger determining devices determines the danger.

In another aspect of the present invention, the mediating means is characterized in that it sets levels according to types and/or degrees of dangers, integrates the respective levels of the plurality of dangers, and outputs a signal according to an integrated level to the alarming sections.

In this manner, when the plurality of dangers are determined to be approaching, an integrated level for the respective dangers is obtained, so that the alarming sound is varied according to the integrated level.

In another aspect of the present invention, the danger determining section includes a danger determining device that is used for an automatic cruise control and receives a detection signal from a vehicular forward state detection sensor that is used for the automatic cruise control and detects a forward danger target.

In another aspect of the present invention, the danger determining section includes a danger determining device that is used for parking the vehicle and receives a detection signal from a vehicular proximity state detection sensor that is used when the vehicle is parked and detects a proximity danger target.

In another aspect of the present invention, the danger determining section is characterized by including a danger determining device, wherein the danger determining device is used for navigation, receives map information from a navigation system mounted in the vehicle, and determines the danger.

As described above, the danger determining section includes a danger determining device for an automatic cruise control, a danger determining device for parking a vehicle, and a danger determining device for navigation.

In another aspect of the present invention, it is characterized in that types and/or degrees of the danger is classified by whether a person exists or not. In another aspect of the present invention, it is characterized in that types and/or degrees of the danger is classified by whether a person exists or not, whether another vehicle exists or not, or whether an obstacle other than the person and the another vehicle exists or not. In this manner, types or degrees can be classified by whether a person exists or not, or the like.

The above and other objects, features, and advantages of the present invention will become more apparent from the following detailed description made with reference to the accompanying drawings. In the drawings:
FIG. 1 is a diagram showing a block structure of a vehicular traveling information alarm system according to a first embodiment of the present invention;
FIG. 2 is a pattern diagram explaining setup of danger regions of the vehicular traveling information alarm system shown in FIG. 1;
FIG. 3 is a flow chart diagram of a process executed by a coordinator of the vehicular traveling information alarm system shown in FIG. 1;
FIG. 4 is a flow chart diagram of a process executed by a coordinator of a vehicular traveling information alarm system according to a second embodiment of the present invention;
FIG. 5 is a flow chart diagram of a process executed by an ACC ECU of a vehicular traveling information alarm system according to a third embodiment of the present invention;
FIG. 6 is a flow chart diagram of a process executed by a parking ECU of the vehicular traveling information alarm system according to the third embodiment of the present invention;
FIG. 7 is a flow chart diagram of a process executed by a navigation ECU of the vehicular traveling information alarm system according to the third embodiment of the present invention;
FIG. 8 is a flow chart diagram of a process executed by a coordinator of a vehicular traveling information alarm system according to a fourth embodiment of the present invention; and
FIG. 9 is a diagram showing a block structure of a vehicular traveling information alarm system according to a fifth embodiment of the present invention.

### (First Embodiment)

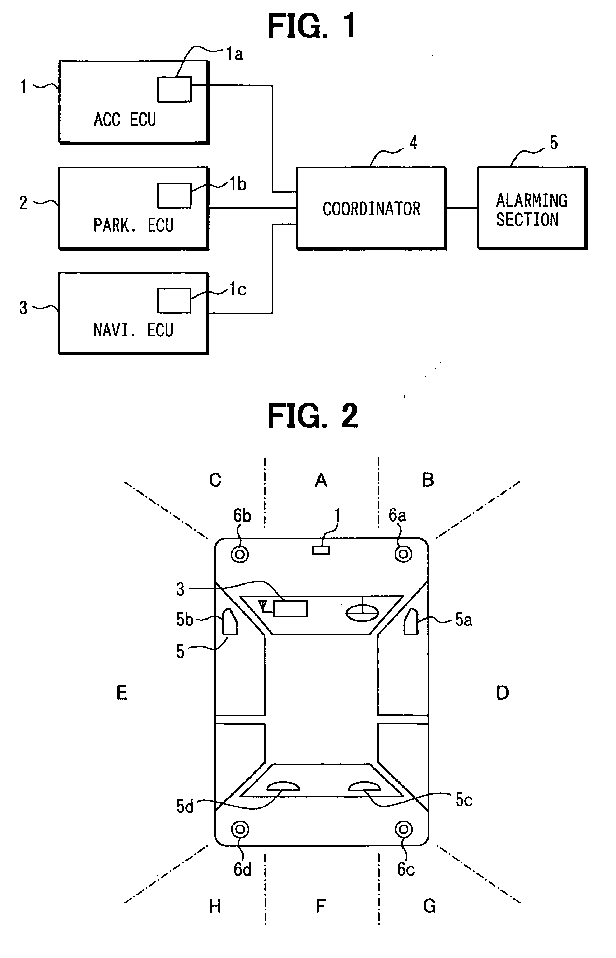

A block structure of a vehicular traveling information alarm system according to a first embodiment of the present invention is shown in FIG. 1 while a pattern structure of this system is shown in FIG. 2. Hereinafter, with reference to these drawings, a structure of the vehicular traveling information alarm system will be explained.

The vehicular traveling information alarm system includes an ECU 1 (ACC ECU 1) for an automatic cruise control (ACC), an ECU 2 (parking ECU 2) for parking a vehicle, a navigation ECU 3, a coordinator connected with the ECUs 1 to 3, and an alarming section 5.

The ACC ECU 1, parking ECU 2, or navigation ECU 3 corresponds to a danger detecting means (danger determining device) for detecting a danger that may approach a vehicle, namely, a danger that is realistically approaching the vehicle or assumed to approach the vehicle. When the danger is detected by these danger determining means, a data signal indicating the detection of the danger is sent to a coordinator 4.

The ACC ECU 1 is a control unit for an automatic cruise control. This ACC ECU 1 is inputted a signal from a vehicular forward state detection sensor disposed in a front portion or the like of the vehicle as shown in FIG. 2. The vehicular forward state detection sensor is for detecting information relating to a dangerous object forward of the vehicle; for instance, the sensor corresponds to a laser radar, a sensor for detecting an obstacle using milli-meter wave and its reflection wave. This sensor detects information such as whether a vehicle ahead or a vehicle traveling in an adjacent lane is present or not, or whether an obstacle such as an electric pole or a person is present or not. Here, the vehicular forward state detection sensor is generally not operated except for a period of executing the automatic cruise control; however, in this embodiment, the sensor is operated even for a period except for the period of the automatic cruise control.

The ACC ECU 1 includes an ACC danger determining section 1 a. When the ACC ECU 1 is inputted a signal from a vehicular forward state detection sensor, this ACC danger determining section 1 a determines whether the danger is approaching to the relevant vehicle or the degree of the danger approaching, outputting an eventual data signal to the coordinator 4.

The parking ECU 2 is for indicating information regarding an obstacle surrounding the relevant vehicle while the vehicle is being parked. This parking ECU 2 is inputted detection signals from corner sonars (front sonar and back sonar) 6a to 6d disposed in the respective corners of the vehicle as shown in FIG. 2 and from a front and back monitors (not shown) for parking the vehicle. These corner sonars 6a to 6d and front and back monitors correspond to a vehicular proximity state detection sensor for detecting a proximity state of the vehicle, detecting information regarding dangers existing in the proximity of the vehicle, e.g., information whether another vehicle, a person, an electric pole or other obstacles exist in the proximity of the vehicle.

The parking ECU 2 includes a parking danger determining section 2a. When the parking ECU 2 is inputted a signal from the corner sonars, front monitor, or back monitor, this parking danger determining section 2a determines whether the danger is approaching to the relevant vehicle or the degree of the danger approaching, outputting an eventual data signal to the coordinator 4.

The navigation ECU 3 is, for instance, built in a navigation system contained in an instrument panel of the vehicle interior for detecting position information of the relevant vehicle using a GPS receiver. The navigation ECU 3 is further for indicating information regarding a danger in a road or its proximity where the vehicle is currently traveling based on the position information and map information stored in a memory of the navigation system.

The navigation ECU 3 includes a navigation danger determining section 3a. When the navigation ECU 3 previously derives information regarding the road where the vehicle is to travel in the near future to thereby forecast a danger approaching the relevant vehicle, a data signal regarding the danger is outputted to the coordinator 4.

The coordinator 4 corresponds to a coordinating means and coordinates the respective data signals based on the data signals sent from the ECUs 1 to 3, outputting, based on the result of coordinating, the alarming signal according to the types or degrees of the danger to the alarming section 5.

The alarming section 5 is constructed of multiple speakers 5a to 5d disposed in the different positions of the vehicle interior. The speakers 5a to 5d include a right forward speaker 5a and a left forward speaker 5b, both of which are disposed in the both front doors, and a right backward speaker 5c and a left backward speaker 5d, both of which are disposed in the proximity of the rear seat. Here, one or some of the multiple speakers 5a to 5d can be used in common as a speaker for an audio device. The alarming section 5 causes the relevant speaker to sound in the sound quality or volume according to the alarming signal from the coordinator 4.

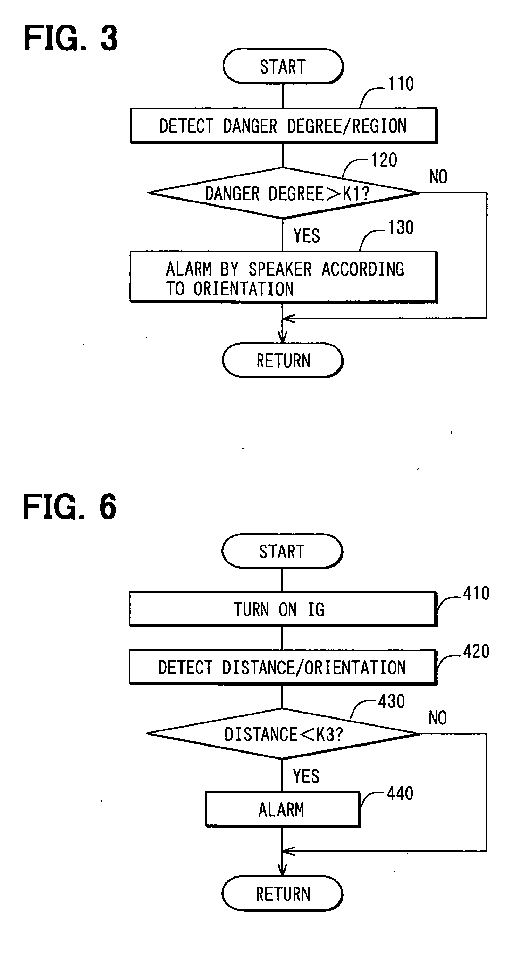

A danger alarm method executed by the vehicular traveling information alarm system having the above structure will be now explained below. FIG. 3 shows a flow chart of a danger alarm process executed by the coordinator 4; based on this drawing, details of the danger alarm method executed by the vehicular traveling information alarm system will be explained.

At first, at Step 110, the coordinator 4 detects a degree and region of the danger based on a data signal regarding the danger sent from the respective ECUs 1 to 3.

Here, the degree of the danger is set according to a type of an object being the danger, a distance to the object, or a period for which the vehicle reaches the object. For instance, when the object of the danger is a person and the person is located in the proximity of the vehicle, the danger degree is the highest; when the object of the danger is unrelated to a person, such as an electric pole, the danger degree is set to low. Further, as the distance to the object becomes shorter, the danger degree is set to higher; as the period up to reaching the object becomes shorter, the danger degreed is set to higher.

Furthermore, the danger region is set based on Regions A to H shown in FIG. 2. In detail, Region A is assigned to a central forward region of the vehicle; Region B is assigned to a right forward region of the vehicle; Region C is assigned to a left forward region of the vehicle; Region D is assigned to a rightward region of the vehicle; Region E is assigned to a leftward region of the vehicle; Region F is assigned to a central backward region of the vehicle; Region G is assigned to a right backward region of the vehicle; and Region H is assigned to a left backward region of the vehicle. The region corresponding to the orientation where the danger is approaching is regarded as the danger region.

In this process, for instance, when the corner sonars 6a to 6d detect, while the vehicle is being parked, an obstacle such as a wall that is located left backward of the vehicle with a relatively allowable distance, the danger degree is recognized to be low and the danger region is recognized as Region H. Here, when the respective ECUs 1 to 3 output data signals regarding danger at the same moment, each danger degree and region can be set according to each of the data signals. However, by mediating of the coordinator 4, the relatively high danger degree or the highest danger degree can be selected, which enables a danger degree and region to be set with respect only to the selected danger.

Next, at Step 120, it is determined whether the danger degree set at Step 110 exceeds a given value of K1. When the danger degree is determined not to exceed K1, the danger degree is regarded as a low danger degree, terminating the process. By contrast, when the danger degree is determined to exceed K1, the danger degree is regarded as a high danger degree, advancing the process to Step 130.

At Step 130, the coordinator 4 outputs to the alarming section 5 an alarming signal according to the orientation corresponding to the danger region. This causes, of the alarming section 5, the speaker 5a to 5d according to the orientation detected as the danger region to output the alarming sound. For instance, when Region A is the danger region, the right and left forward speakers 5a, 5b sound; when Region B, the right forward speaker 5a; when Region C, the left forward speaker 5b; when Region D, the right forward and right backward speakers 5a, 5c; when Region E, the left forward and left backward speakers 5b, 5d; when Region F, the right and left backward speakers 5c, 5d; when Region G, the right backward speaker 5c; and when Region H, the left backward speaker 5d.

Thus, the vehicular traveling information alarm system according to the embodiment detects the danger approaching a vehicle and the orientation where the danger approaches, causing a speaker 5a to 5d disposed in a position according to the orientation to sound. This enables notice of the orientation of the danger, resulting in notifying a driver or occupant of the orientation of the danger.

### (Second Embodiment)

A second embodiment of the present invention will be explained. A vehicular traveling information alarm system according to the second embodiment includes other danger detecting means in addition to the ACC ECU 1, parking ECU 2, and navigation ECU 3. Further, a process executed by a coordinator 4 of the second embodiment is different from that of the first embodiment. Others are the same as in the first embodiment, so that the different parts will be explained below.

In this embodiment, other danger detecting means are included in addition to the respective ECUs 1 to 3. The other danger detecting means include, for instance, a communications device that receives radio waves indicating road information via an antenna attached to the vehicle and detects, based on the received signal, a place of an accident.

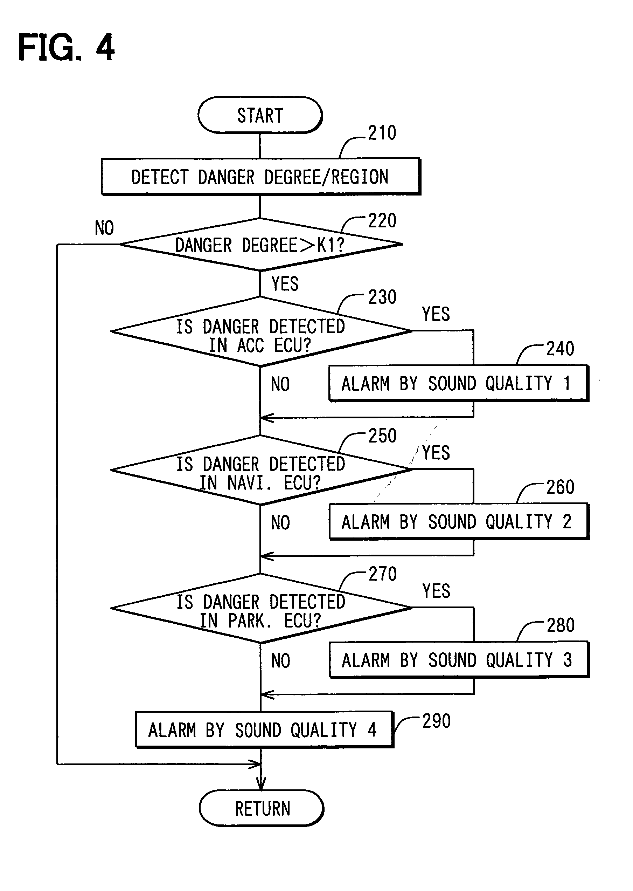

FIG. 4 shows a flow chart of the process executed by the coordinator 4 in this vehicular traveling information alarm system.

As shown in this drawing, at Steps 210, 220, the coordinator 4 executes the same process as those at Steps 110, 120 in FIG, 3 of the first embodiment. When the danger degree is determined to exceed K1, the process advances to Step 230 and the subsequent.

At Step 230 and subsequent Steps, it is determined which danger detecting means detects the danger whose danger degree exceeds the threshold K1, the process of outputting the alarming sound takes place according to the determination.

At Step 230, it is determined whether the danger whose danger degree exceeds the threshold K1 is derived from the ACC ECU 1. Affirmative determination proceeds the process to Step 240, while negative determination proceeds the process to Step 250. At step 240, the coordinator 4 outputs an alarming signal to the alarming section 5, indicating the orientation according to the danger region and that the danger is detected by the ACC ECU 1. This causes the speakers 5a to 5d corresponding to the danger region to output the alarming sound in a sound quality 1 (first sound quality) meaning that the ACC ECU 1 detects the danger.

At Step 250, it is determined whether the danger whose danger degree exceeds the threshold K1 is derived from the navigation ECU 3. Affirmative determination proceeds the process to Step 260, while negative determination proceeds to Step 270. At step 260, the coordinator 4 outputs an alarming signal to the alarming section 5, indicating the orientation according to the danger region and that the danger is detected by the navigation ECU 3. This causes the speakers 5a to 5d corresponding to the danger region to output the alarming sound in a sound quality 2 (second sound quality) meaning that the navigation ECU 3 detects the danger.

At Step 270, it is determined whether the danger whose danger degree exceeds the threshold K1 is derived from the parking ECU 2. Affirmative determination proceeds the process to Step 280, while negative determination proceeds to Step 290. At step 280, the coordinator 4 outputs an alarming signal to the alarming section 5, indicating the orientation according to the danger region and that the danger is detected by the parking ECU 2. This causes the speakers 5a to 5d corresponding to the danger region to output the alarming sound in a sound quality 3 (third sound quality) meaning that the parking ECU 2 detects the danger.

At Step 290, it is indicated that the danger whose danger degree exceeds the threshold K1 potentially approaches. Namely, the alarm is eventually outputted even when the danger whose danger degree exceeds the threshold K1 is detected by any danger detecting means excluding the ACC ECU 1, parking ECU 2, and navigation ECU 3. Accordingly, at this Step 290, the coordinator 4 outputs an alarming signal to the alarming section 5, indicating the orientation according to the danger region and that the danger whose danger degree exceeds the threshold K1 is detected by any one of the danger detecting means. This causes the speakers 5a to 5d corresponding to the danger region to output the alarming sound in a sound quality 4 (fourth sound quality) meaning that any one of the other danger detecting means detects the danger.

Thus, in this embodiment, a sound quality of the alarming sound outputted by the speaker 5a to 5d is varied depending on which danger detecting means detects the danger. This enables the drive, etc. to recognize the type of the danger based on the sound quality of the alarming sound.

Further, this embodiment includes the danger detecting means other than the ACC ECU 1, parking ECU 2, and navigation ECU 3.; however, only the foregoing three ECUs can be used for this process and any two ECUs 1 to 3 of the three ECUs 1 to 3 can be also used for this process.

### (Third Embodiment)

A third embodiment of the present invention will be explained. A vehicular traveling information alarm system according to the third embodiment has a different feature of varying the alarming sound according to the type or degree of the danger in comparison with the first embodiment. The other parts are the same as those of the first embodiment, so that only the different parts will be explained below.

In this embodiment, the respective ECUs 1 to 3 determines the type or degree of the danger and sends the corresponding data signal to the alarming section 5, which generates the alarming sound according to the type or degree of the danger. In detail, the ECUs 1 to 3 execute the process as follows.

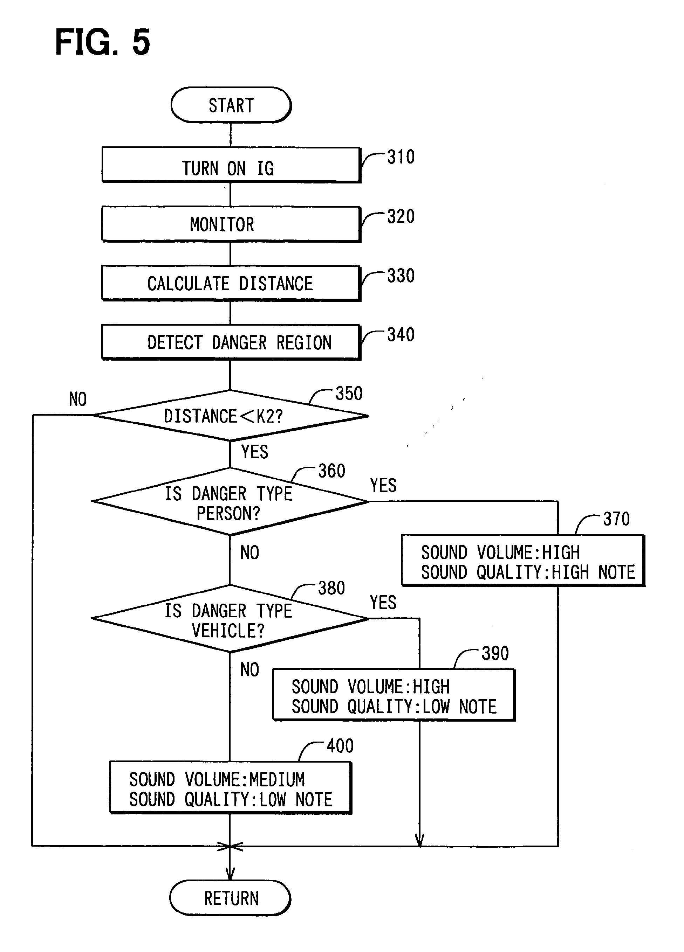

FIGs. 5 to 7 show flow chart diagrams of the processes executed by the ECUs 1 to 3.

FIG. 5 shows the flow chart diagram of the process executed by the ACC ECU 1. The ACC ECU 1 executes the process at Step 320 and the subsequent when the ignition switch (IG) is turned on at Step 310.

At Step 320, monitoring is executed using the vehicular forward information detection. sensor such as a laser radar, which detects information regarding a dangerous object forward of the vehicle. In detail, what exists as the dangerous object is detected, for instance, it is detected whether a vehicle ahead or a vehicle traveling in an adjacent lane is present or not, whether a person or an obstacle such as an electric pole. Here, as explained above, the monitoring by the vehicular forward information detection sensor is generally operated only while the automatic cruise control is performed; however, the monitoring itself can be operated even while the automatic cruise control is not operated. This step can be thereby executed even for a period for which no automatic cruise control is operated.

Next, at Step 330, a distance to the dangerous object is calculated. The calculation of the distance is executed based on the detection signal by the vehicular forward information detection sensor, using the same method as that is executed to keep a constant distance with a vehicle ahead while executing the automatic cruise control.

At Step 340, a danger region is detected. In this process, it is detected which orientation the dangerous object detected by the vehicular forward information detection sensor exists in, and which danger region defined in FIG. 2 the dangerous object exists in.

At Step 350, it is determined whether the distance calculated at Step 330 is less than a threshold value of K2, or whether the distance reaches the point where the alarm should be outputted. Affirmative determination advances the process to Step 360, while negative determination terminates the process due to no need of alarming.

At Step 360, based on a result of the monitoring at Step 320, it is determined whether a type of the dangerous object is a person or not. When the type is a person, a danger degree is recognized to be high so that an attention should be specially paid. Therefore, affirmative determination at this step advances the process to Step 370. Here, the alarming section 5 is outputted from the ACC ECU 1 the alarming signal including, in addition to the danger region data, data indicating that a sound volume is high and a sound quality is high note as data of the alarming sound. This causes the speaker 5a to 5d corresponding to the danger region to output the sound in the high volume and high note.

By contrast, negative determination at Step 360 advances the process to Step 380. At Step 380, based on a result of the monitoring at Step 320, it is determined whether a type of the dangerous object is a vehicle or not. When the type is a vehicle, a danger degree is recognized to be high next to that of the person. It is because it may be related to a human's life although the danger degree of the vehicle is lower than that of the person. Therefore, affirmative determination at this step advances the process to Step 390. Here, the alarming section 5 is outputted from the ACC ECU 1 the alarming signal including, in addition to the danger region data, data indicating that a sound volume is high and a sound quality is low note as data of the alarming sound. This causes the speaker 5a to 5d corresponding to the danger region to output the sound in the high volume and low note.

Further, negative determination at Step 380 advances the process to Step 400. The negative determination at Step 380 means that the danger degree is not so high since the dangerous object is neither a person nor vehicle. For instance, a simple obstacle such as an electric pole corresponds to this. Therefore, affirmative determination at this step advances the process to Step 400. Here, the alarming section 5 is outputted from the ACC ECU 1 the alarming signal including, in addition to the danger region data, data indicating that a sound volume is low and a sound quality is low note as data of the alarming sound. This causes the speaker 5a to 5d corresponding to the danger region to output the sound in the low volume and low note.

Thus, the alarming sound can be varied according to the type of the danger detected by the ACC ECU 1.

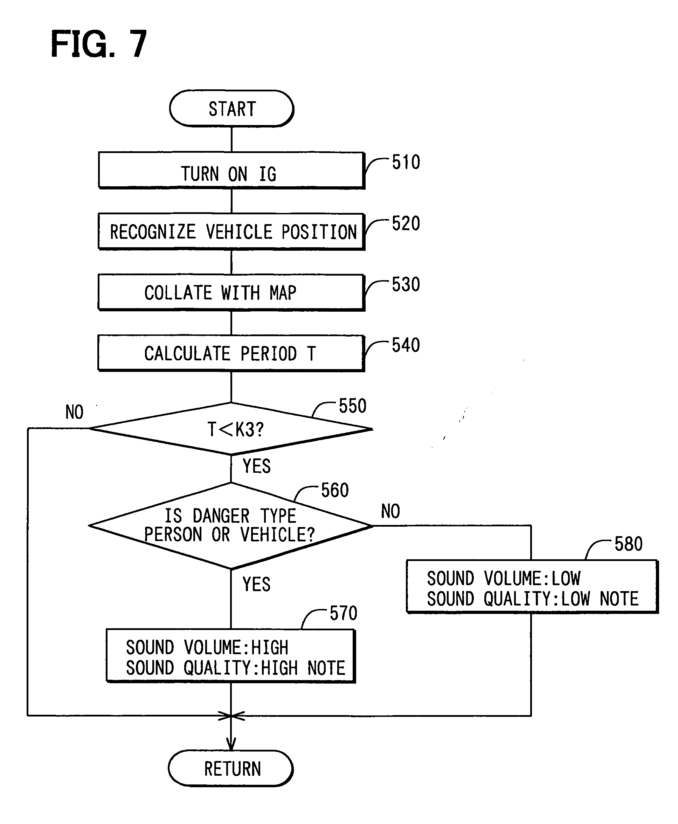

FIG. 6 shows the flow chart diagram of the process executed by the parking ECU 2. The parking ECU 2 executes the process at Step 420 and the subsequent when the ignition switch (IG) is turned on at Step 410.

At Step 420, a distance and orientation (danger region) of a dangerous object is detected based on detection signals from the corner sonars, a front monitor, a back monitor, or the like. Here, the calculation of the distance uses a method which is generally used in a corner sonar.

At Step 430, it is determined whether the distance calculated at Step 420 is less than a threshold value of K3, or whether the distance reaches the point where the alarm should be outputted. Affirmative determination advances the process to Step 440, while negative determination terminates the process due to no need of alarming.

At Step 440, the alarming section 5 is outputted from the parking ECU 2 the alarming signal according to the orientation corresponding to the danger region. This causes the speaker 5a to 5d corresponding to the danger region to output the sound.

FIG. 7 shows the flow chart diagram of the process executed by the navigation ECU 3. The navigation ECU 3 executes the process at Step 520 and the subsequent when the ignition switch (IG) is turned on at Step 510.

At Step 520, a current position of the relevant vehicle is recognized based on GPS signals received via the GPS receiver. Next, at Step 530, the current position of the relevant vehicle recognized based on the GPS signals is collated with map information stored in a memory of the navigation system. This enables information of a road where the vehicle is to travel in the near future to be derived. BY this information, whether the danger is approaching the vehicle or the orientation (danger region) of the dangerous object can be predicted.

At Step 540, a period T in which the vehicle reaches the dangerous object predicted at Step 530 is calculated. The period T is calculated using a distance to the dangerous object and a vehicle speed Vso. The distance to the dangerous object is derived based on the information of the road obtained at Step 530, while the vehicle speed Vso is calculated based on the distance to the dangerous object and pulse signals from a wheel speed sensor (not shown).

At Step 550, it is determined whether the period T is less than a threshold value of K3 by comparing with each other. The threshold value of K3 is set to a period in which the vehicle reaches the dangerous object is short so that notice of the existence of the dangerous object should be given to the driver or the like. Thus, by negative determination, the dangerous object is determined to be not present or the period up to reaching the dangerous object is determined to still have an allowable margin, which terminates the process. By contrast, affirmative determination advances the process to Step 560.

At Step 560, it is determined whether a type of the danger is related to a person or another vehicle, or whether the danger has a high degree so that an attention is specially paid. For instance, the danger having a high danger degree is corresponded to by a place where a person or another vehicle may abruptly appears and a place where traffic accidents frequently occur, such as a road facing a school, a school-commuting road, an alleyway, an intersection without traffic signals, a T-shaped road (side road). By contrast, the danger having the high danger degree is not corresponded to by a case where the danger is unrelated to a person or another vehicle although the driver should be notified of an attention due to the danger relating to the relevant vehicle itself, such as an electric pole, a bridge, a road where the width is being narrowed, or the like.

Affirmative determination at Step 560 advances the process to Step 570. Here, since the danger degree is determined to be high, the alarming section 5 is outputted from the navigation ECU 3 the alarming signal including, in addition to the danger region data, data indicating that a sound volume is high and a sound quality is high note as data of the alarming sound. This causes the speaker 5a to 5d corresponding to the danger region to output the sound in the high volume and high note.

Here, the speaker 5a to 5d according to the danger region is disposed in the orientation where the target being the dangerous object is located. For instance, the left forward speaker 5b sounds when an electric pole is approaching left forward of the vehicle, while the right forward speaker 5a sounds when a T-shaped road is approaching right forward of the vehicle.

By contrast, negative determination at Step 560 advances the process to Step 580. The negative determination at Step 560 means that the danger degree is not so high. Here, the alarming section 5 is outputted from the navigation ECU 3 the alarming signal including, in addition to the danger region data, data indicating that a sound volume is low and a sound quality is low note as data of the alarming sound. This causes the speaker 5a to 5d corresponding to the danger region to output the sound in the low volume and low note.

As explained above, in this embodiment, the alarming sound can be varied with respect to at least one of the sound volume and sound quality according to the type or degree of the danger detected by the'respective ECUs 1 to 3. This enables notice of the type or degree of the danger to the driver or the like to be performed based on the sound quality and sound volume.

### (Fourth Embodiment)

A fourth embodiment of the present invention will be explained. A vehicular traveling information alarm system according to the fourth embodiment has a different feature of outputting an alarming sound integrating the multiple types of dangers that are detected in comparison with the first embodiment.

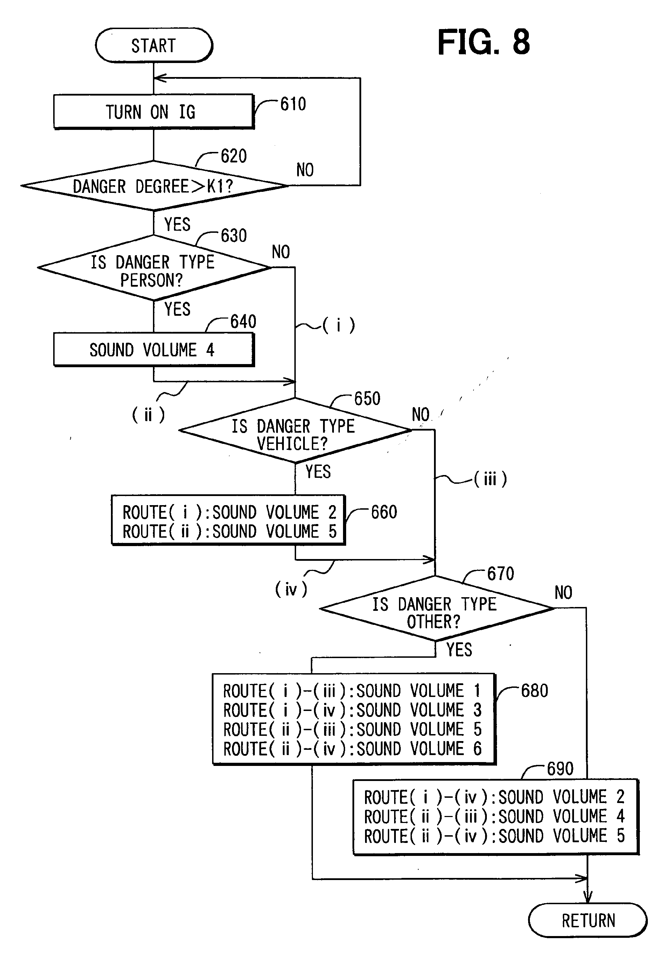

FIG. 8 shows a flow chart diagram of the process executed by a coordinator 4 according to this embodiment. Here, a sound volume level of an alarming sound is varied based on which type a danger is and which types of dangers are overlapped. The sound volume level is set according to a sound volume. In this embodiment, level 1 corresponds to the lowest volume. As the level increases, the volume increases. Level 6 corresponds to the highest volume.

At first, at Steps 610, 620, the same process at Steps 110, 120 in FIG.3 takes place. Next, at Step 630, it is determined whether a type of the danger is a person or not. Here, affirmative determination results in storing selection of a route (ii) where the danger type is determined to be a person. For instance, the selection of the route (ii) is stored by executing a process of putting a flag on. Thereafter, at Step 640, the sound level is set to level 4, advancing the process to Step 650. By contrast, negative determination results in storing a route (i) where the danger type is determined to be not a person. For instance, selection of a route (i) is stored by not executing the process of putting the flag on. Here, the process advances to Step 650 without setting the sound volume level.

At Step 650, it is determined whether the type of the danger is a vehicle or not. Here, affirmative determination results in storing selection of a route (iv) where the danger type is determined to be a vehicle. For instance, the selection of the route (iv) is stored by executing a process of putting a flag on. Thereafter, at Step 660, the sound level is set, advancing the process to Step 670.

Here, the sound volume level is set according to the route selected at Step 630, as shown at Step 660. In detail, when the route (i) is previously selected, the sound volume level is set to level 2 since the danger type currently detected is a vehicle. By contrast, when the route (ii) is previously selected, the sound volume level is set to level 5 since the danger types currently detected are not only a vehicle but also a person; the level 5 is a higher level corresponding to the danger type being only a person.

Further, negative determination at Step 650 results in storing selection of a route (iii) where the danger type is determined not to be a vehicle. For instance, the selection of the route (iii) is stored by not executing the process of putting the flag on. Here, the process advances to Step 670 without changing the sound volume level.

At Step 670, it is determined whether the type of the danger is another object excluding a person and vehicle. Here, affirmative determination means that the danger type is determined to be another object, advancing the process to Step 680 where the sound volume level is set. The sound volume level is set according to the routes previously selected with similarity to that at Step 660. In detail, when the routes (i) and (iii) are previously selected, the sound volume level is set to level 1 since the danger type is only another object. When the routes (i) and (iv) are previously selected, the sound volume level is set to level 3 since the danger types are a vehicle and another object. When the routes (ii) and (iii) are previously selected, the sound volume level is set to level 5 since the danger types are a person and another object; the level 5 is increased by one in comparison with the danger type being only a person. When the routes (ii) and (iv) are previously selected, the sound volume level is set to the highest level 6 since all the danger types are detected.

By contrast, negative determination means that the danger type is determined not to include another object, advancing the process to Step 690 where the sound volume level is not changed and the process is terminated. Namely, when the routes (i) and (iv) are previously selected, the sound volume level is maintained at level 2 since the danger type is only a vehicle. When the routes (ii) and (iii) are previously selected, the sound volume level is maintained at level 4 since the danger type is only a person. When the routes (ii) and (iv) are previously selected, the sound volume level is set to level 5 since the danger types are a person and another object; the sound volume level is maintain at level 5 since the danger types are a person and vehicle.

As explained above, the vehicular traveling information alarm system according to this embodiment is constructed to output the alarming sound in consideration of the respective danger types when the multiple danger types are detected. Therefore, the driver or the like can recognize that the multiple types of dangers approach the relevant vehicle.

### (Fifth Embodiment)

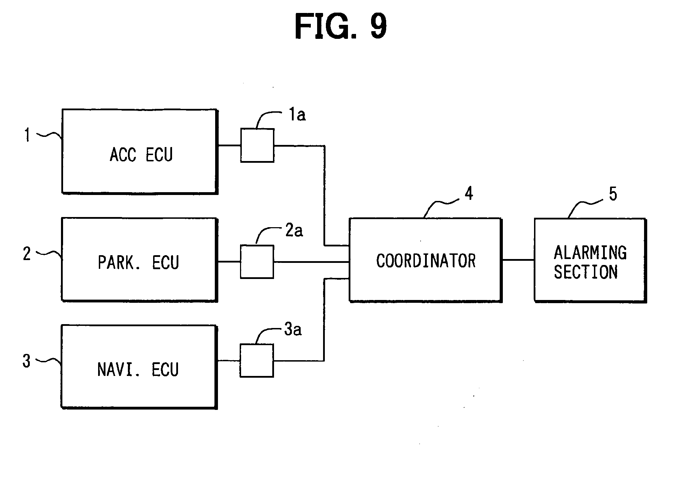

A fifth embodiment of the present invention will be explained. FIG. 9 shows a block structure of a vehicular traveling information alarm system according to this embodiment. In the vehicular traveling information alarm system according to this embodiment, danger determining sections 1a to 3a are constructed independently of ECUs 1 to 3 in comparison with those of the first embodiment.

Generally, a navigation system that is being currently marketed contains no navigation danger determining section 3a. Therefore, independent structure of the danger determining sections 1 a to 3a separated from the ECUs 1 to 3, as shown in this embodiment, enables the present invention to be directed to a navigation system initially having no navigation danger determining section 3a.

Further, here, an ACC danger determining section 1 a and parking danger determining section 2a are also independent of the respective ECUs 1, 2; however, any one or two of the three danger determining sections 1 a to 3a can be independently constructed of the corresponding ECUs 1 to 3 with the remaining is built in the corresponding ECUs 1 to 3.

### (Other Embodiment)

In the second embodiment, the sound quality is varied according to which ECU 1 to 3 detects the danger. This enables a driver or the like to recognize the type of ECU 1 to 3 that detects the danger. However, a sound volume can be varied instead of the sound quality.

In the third embodiment, when the dangerous object is detected at Step 560, the alarming sound is outputted. However, it is supposed that a vehicle travels in a road having two lanes in one direction even when a dangerous object exists and further the vehicle travels in one of the two lanes that makes no contact with the dangerous object. In this case, no alarming sound is required. Furthermore, it is possible that an alarming sound is outputted by whether another vehicle is traveling in an adjacent lane; however, the alarming sound can be outputted only when another vehicle is traveling in the adjacent lane and the relevant vehicle is going to change its traveling lane with its blinker flickering. Namely, in a case where the danger is supposed only when the relevant vehicle turns at an intersection or changes its traveling lane, an alarming sound can be outputted in cooperation with the blinker.

In the third embodiment, an alarming sound is not varied according to the type of the danger that is detected by the parking ECU 2. It is because, when a vehicle potentially hits something, at present a similar alarm is generally outputted according to any one of a person, another vehicle, or an object. However, an alarming sound can be varied according to the types of danger.

Yet furthermore, in the above embodiments, by varying a sound volume, or a sound quality, an alarm is outputted according to types of danger. However, the sound volume or the sound quality are unnecessarily limited to. For instance, a melody of an alarming sound or a frequency of an alarming sound can be also varied for this purpose.

In addition, Steps shown in the figures correspond to means executing various processes.

It will be obvious to those skilled in the art that various changes may be made in the above-described embodiments of the present invention. However, the scope of the present invention should be determined by the following claims.

## Claims

1. A vehicular traveling information alarm system provided in a vehicle, **characterized by** comprising:
a danger determining section (1a to 3a) for detecting a danger that potentially approaches the vehicle and an orientation of the danger and for generating an output indicating that the danger potentially approaches the vehicle and the orientation; and
a plurality of alarming sections (5a to 5d), each of which generates an alarming sound based on the output from the danger determining section,
wherein each of the plurality of alarming sections is disposed in a different position within an interior of the vehicle, and
wherein, when a danger is detected by the danger determining section, one of the alarming sections that is disposed in a position corresponding to an orientation of the danger generates an alarming sound.

2. The vehicular traveling information alarm system of Claim 1, further comprising:
danger type and degree determining means (4) for determining danger information including at least one of a type of the danger and a degree of the danger according to the output of the danger determining section and for outputting a result of determining to the alarming sections,
wherein the alarming sound is generated according to the danger information determined by the danger type and degree determining means.

3. The vehicular traveling information alarm system of Claim 2, wherein,
the alarming sound is generated when the type of the danger determined by the danger type and degree determining means is a given type or the degree of the danger exceeds a threshold (K1).

4. The vehicular traveling information alarm system of Claim 2 or 3, wherein
the alarming sound is varied according to the danger information determined by the danger type and degree determining means.

5. The vehicular traveling information alarm system of Claim 4, wherein
at least one of a volume of the alarming sound and a quality of the alarming sound is varied according to the danger information determined by the danger type and degree determining means.

6. The vehicular traveling information alarm system of Claim 1, wherein
the danger determining section detects a plurality of dangers potentially approaching the vehicle,
the vehicular traveling information alarm system further comprising:
mediating means for mediating the plurality of dangers detected by the danger determining section and for outputting a signal according to a result of mediating to the alarming sections, wherein the alarming sections generate the alarming sounds according to the result of mediating.

7. The vehicular traveling information alarm system of Claim 6, wherein
the mediating means determines danger information including at least one of a type of the danger and a degree of the danger and outputs, to the alarming sections, a signal according to a result of determining.

8. The vehicular traveling information alarm system of Claim 6 or 7, wherein
the danger determining section detects the plurality of dangers by at least two danger determining devices (1 to 3) having different functions,
the mediating means outputting, to the alarming sections, different signals depending on which of the danger determining devices having the different functions detects each of the dangers, and
the alarming sections generate different alarming sounds according to the different signals.

9. The vehicular traveling information alarm system of any one of Claims 6 to 8, wherein
the mediating means sets levels according to danger information including at least one of a type of each of the dangers and a degree of each of the dangers, integrates the respective levels of the dangers, and outputs a signal according to an integrated level to the alarming sections.

10. The vehicular traveling information alarm system of any one of Claims 1 to 9, wherein
the danger determining section includes a danger determining device (1 a) that is used for an automatic cruise control and receives a detection signal from a vehicular forward state detection sensor that is used for the automatic cruise control and detects a forward danger target.

11. The vehicular traveling information alarm system of any one of Claims 1 to 10, wherein
the danger determining section includes a danger determining device (2a) that is used for parking the vehicle and receives a detection signal from a vehicular proximity state detection sensor that is used when the vehicle is parked and detects a proximity danger target.

12. The vehicular traveling information alarm system of any one of Claims 1 to 11, wherein
the danger determining section includes a danger determining device (3a), wherein the danger determining device is used for navigation, receives map information from a navigation system mounted in the vehicle, and determines the danger.

13. The vehicular traveling information alarm system of any one of Claims 1 to 12, wherein
danger information including at least one of a type of the danger and a degree of the danger is classified by whether a person exists or not.

14. The vehicular traveling information alarm system of any one of Claims 1 to 13, wherein
danger information including at least one of a type of the danger and a degree of the danger is classified by whether a person exists or not, whether another vehicle exists or not, or whether an obstacle other than the person and the another vehicle exists or not.

15. A vehicular traveling information alarm system provided in a vehicle,
**characterized by** comprising:
a danger determining section (1a to 3a) disposed for detecting an orientation of the danger that potentially approaches the vehicle and for generating an output indicating the orientation of the danger; and
at least four of speakers (5a to 5d), each of which generates an alarming sound based on the orientation of the danger indicated by the output from the danger determining section, wherein the speakers include:
a first speaker (5a) disposed right forward within an interior of the vehicle;
a second speaker (5b) disposed left forward within the interior of the vehicle;
a third speaker (5c) disposed right backward within the interior of the vehicle; and
a fourth speaker (5d) disposed left backward within the interior of the vehicle, wherein at least one of the speakers is used in common as a speaker for an audio device.
